# EUROPEAN PATENT APPLICATION

(11) **EP 4 492 745 A1**
(43) Date of publication of application: **15.01.2025**
(21) Application number: 24185996.6
(22) Date of filing: 02.07.2024
(51) Int. Cl.: H04L 41/14

(54) **APPARATUSES AND METHODS FOR PERFORMING AN EXPERIMENT IN A NETWORK DIGITAL TWIN**

(30) Priority: 13.07.2023 FI 20235819
(71) Applicant: Nokia Solutions and Networks Oy, 02610 Espoo (FI)
(72) Inventor: FOROUGHI, Parisa, Paris (FR); BEGA, Dario, Munich (DE); CONTE, Alberto, L'Hay-les-Roses (FR)
(74) Representative: Nokia EPO representatives

(57) **Abstract**

A method, comprising:
receiving an request for experiment, wherein the request for experiment comprises experiment attributes related to an experiment to be performed in a Network Digital Twin of a real communications network;
deriving requirements for component digital twins from the experiment attributes;
discovering at least one component digital twin in a first network digital twin (NDT) instance of the real communications network, wherein the at least one component digital twin satisfies at least one of the requirements for component digital twins, wherein the first NDT instance comprises a first plurality of component digital twins; and
creating a second NDT instance for performing the experiment, wherein the second NDT instance comprises a second plurality of component digital twins satisfying all said requirements for component digital twins, said second plurality of component digital twins including the at least one component digital twin.

## Description

### Field of the invention

The disclosure relates to apparatuses and methods for performing an experiment in a network digital twin of a real communications network.

### Background

Network digital twins (NDT) are expected to enable a wide range of use cases among which are simulations of what-if scenarios, network observability, optimized service provisioning and remote controlling. Overall, an NDT may encapsulate any means for facilitating a better decision-making process. In addition to the wide range of capabilities, NDT is envisioned to be an ideal platform (service provider) for a diverse range of users that can interact with and benefit from the data and models used in an NDT.

Thus, NDT may be used to verify, predict, test, explore, and analyze the behavioral impacts by running different experiments including but not limited to various tests and changes of configurations in simulation scenarios. These experiments may call for different information, models, and experiment descriptions such as specific environment properties. Each scenario may potentially invoke different capabilities (configuration, code upload, data sync, etc.) of NDT and it may be realized and enabled by different means. In other words, they might require utilizing a different portion of the data and models (applications) that are available through NDT or modify different set of information or configuration.

That is why it is recommended that NDT execute experiments concurrently and independently, instead of sequentially, to improve the processing efficiency as well as respecting the experiment deadlines.

However, despite the high expectations and wide range of requirements for NDT, there are currently no means of provisioning NDT capabilities to different users in an organized and authorized manner to facilitate the simultaneous existence of different experiments and sharing of NDT capabilities, efficiently while avoiding any harmful interactions.

Indeed, one way of avoiding harmful interactions is to completely isolate experiments and use-cases regardless of their commonalities and natural need of sharing of information in which it can be implied that the common information (i.e., models, data, etc.) need to be replicated and the same capabilities such as hardware and software resource and access management, data governance and others of ilk need to be enabled for each experiment individually and in isolation. Though the above mentioned state-of-art approach is solving one problem (isolation of resources), it does not satisfy the requirement of concurrent existence of NDT experiments, rather it generates several independent NDTs. Moreover, it makes management of any synchronization in the direction of NDT towards the real network very hard and complicated due to the lack of visibility into the experiments relating to the same real communications network.

Thus, the conventional approach is equivalent to creating a new NDT per use case user group, or experiment (i.e., replicating all entities, enabling separate versions of the same requirements, data and models every time. This approach is far from efficient in terms of allocation of resources, impact over the mobile network operations (load generated to create and maintain NDTs synched), and energy efficiency, but more importantly it hinders the possibilities of correlating information and knowledge beyond a use-case or user group.

In addition, an NDT is not just a representation of the real communication network but is also expected to encapsulate all other aspects that can impact it (i.e., environment in which the network is operating). Thus, an NDT is more than just an application that runs on an isolated space for one example of experiment description but is expected to have means of interacting with the real communications network and its environment. Although an NDT tailored for one use case may only include one or part of the capabilities such as testing what-if scenarios, verification of configuration changes, monitoring etc., as long as all these capabilities are expected to be tested for the same real communications network or at least part of this network, it is not sensible to create isolated NDTs which are unaware of each other.

Thus, the vast NDT capabilities are in dire need of proper management to fully meet their goal.

Thus, there is a need for apparatuses and methods for performing an experiment in a network digital twin of a real communications network that overcome the aforementioned drawbacks.

### Summary

Apparatuses and methods to facilitate organized and efficient means for the simultaneous existence and sharing of NDT capabilities for different experiments, users, and access authorities are disclosed.

In some embodiments, the disclosure provides a method comprising:
receiving a request for experiment,
wherein the request for experiment comprises experiment attributes related to an experiment to be performed in a Network Digital Twin of a real communications network;
deriving requirements for component digital twins from the experiment attributes;
discovering at least one component digital twin in a first network digital twin (NDT) instance of the real communications network, wherein the at least one component digital twin satisfies at least one of the requirements for component digital twins, wherein the first NDT instance comprises a first plurality of component digital twins, wherein the component digital twins include at least one of, or are selected among:
   ∘ real data collection modules adapted to collect and store data from the real communications network,
   ∘ computation modules adapted to implement models with the collected data to analyze, diagnose and/or emulate operations running in the real communications network or in modifications thereof;
creating a second NDT instance for performing the experiment,
wherein the second NDT instance comprises a second plurality of component digital twins satisfying all said requirements for component digital twins, said second plurality of component digital twins including the at least one component digital twin discovered in the first network digital twin instance, so that the at least one component digital twin is shared by the first and second NDT instances.

Such method enables the authorization, sharing and execution of multiple NDT instances in an efficient manner from resources and energy consumption point of views. In an embodiment, a NDT instance manager is configured to perform the method.

Thanks to these features, the method enables a component digital twin (CDT) to be shared between two or more NDT instances. This sharing allows the execution of multiple NDT instances in an efficient manner as no component digital twin is created if a component digital twin already exists and is adapted to perform a requested experiment.

This method facilitates efficient management of NDT instances considering the vast variety of user requirements and demands. This method provides mechanisms for different users to access the NDT services simultaneously.

The method may also comprises one or more of the following features.

In an embodiment, the experiment attributes comprise:
parameters describing computational resources to which the component digital twins must have access to, synchronization requirements to collect data from the real communications network, and/or time requirements of the experiment.

The experiment attributes provide a description of the experiment meant to be performed. The experiment attributes may be mentioned as plain text in one attribute and, in this embodiment, a natural language process (NLP) may be used to parse the information

In an embodiment, a semantic model may be used to correlate the requirements for component digital twins from the experiment attributes and available NDT instance, component digital twin and/or computational resources .

In an embodiment, the time requirements of the experiment comprise time schedule of the experiment, lifespan of the experiment, latest time the experiment is expected to be achieved, and/or waiting time accepted before the experiment starts. These attributes allows one who want to perform an experiment to specify the above-mentioned time related NDT instance characteristics.

In an embodiment, the requirements for component digital twins comprise computational resources to which the component digital twins must have access to, a synchronization policy to collect data from the real communications network, a description of the environment of the real communications network, and/or a time period during which the component digital twins must be available for the second NDT instance.

In an embodiment, the computation modules adapted to implement models with the collected data to analyze, diagnose and/or emulate operations running in the real communications network or in modifications thereof are selected among:
models adapted to cover topographic information of the real communications network, models adapted to emulate a behaviour of a base station of the real communications network and/or a interworking with another real communications network, models adapted to emulate a behaviour of users equipment of a real communications network, models adapted to characterize links between a equipment and a base station of the real communications network, models adapted to characterize slices of the real communications network, models adapted to emulate a behaviour of a traffic demand of the real communications network at different levels accounting for a temporal and spatial distributions in the real communications network, models adapted to characterize a mobility of users of the real communications network, models adapted to generating different radio propagation conditions , capturing effects, such as path loss, attenuations due to diffraction and rain, shadowing or fast fading, of the real communications network, models adapted to emulate management and optimization models that are applied in the real communications network, models adapted to exploit outputs of the others models.

These models allows a NDT instance to provide, thanks to its component digital twin, an accurate characterization of the real communication network behaviour and its performance assessment, as well as to be flexible for use in different applications and cases.

In an embodiment, the method further comprises:
receiving a modification request for modifying a first experiment,
wherein the first experiment is performed by the first NDT instance,
wherein the modification request comprises modification attributes;
deriving requirements for component digital twins from the modification attributes; detecting that the requirements derived from the modification attributes are not fulfilled by the at least one component digital twin discovered in the first network digital twin instance and shared by the first and second NDT instances;
creating a third NDT instance of the real communications network for performing a modified first experiment in response to the modification request, wherein the third NDT instance comprises a third plurality of component digital twins satisfying all said requirements for component digital twins derived from the modification attributes.

This allows flexibility for the one who want to perform an experiment. It is possible to modify its experiment even if the NDT instance implementing is at least partially shared for another experiment.

In an embodiment, creating the third NDT instance of a real communications network for performing the modified first experiment comprises:
discovering at least one component digital twin in a fourth NDT instance of a real communications network, wherein the at least one component digital twin satisfies at least one of the requirements for component digital twins derived from the modification attributes, wherein the fourth NDT instance comprises a fourth plurality of component digital twins,
wherein the third plurality of component digital twins include the at least one component digital twin discovered in the fourth network digital twin instance, so that the at least one component digital twin discovered in the fourth network digital twin instance is shared by the third and fourth NDT instances.

In other words, the creation of the third NDT instance can also be realized in an as efficient manner as the creation of the second NDT instance.

In an embodiment, the method comprises receiving several requests for experiment, wherein each of the several requests for experiment further comprises priority indication of the experiment, treating the several requests for experiment according to the priority indications.

In an embodiment, the method further comprises:
accessing a workspace as a function of a sender of the request for experiment,
wherein the workspace comprises a plurality of NDT instances and defines the following workspace attributes:
   a plurality of component digital twins, selected among real data collection modules and computation modules, which can be used to create an NDT instance in the workspace,
   access rights and identity of users of the workspace,
   a synchronization policy with the real communications network of the plurality of component digital twins, and/or
   computational resources to which the plurality of component digital twins which can be used to create a NDT part of the workspace can have access to;
deriving requirements for component digital twins so that the requirement for component digital twins are fulfilled by the workspace attributes;
wherein the first NDT instance is discovered within the workspace,
wherein the second NDT instance is created within the workspace.

Thus, the disclosure introduces an NDT workspace as a means for separating different NDT user groups and grant them different access rights and management capabilities based on their needs and targeted view of their network in the requested experiments. Each NDT workspace is expected to host one or more NDT instances that can be used to run experiments simultaneously within one workspace.

For example, an application of NDT is the monitoring, management and configuration of private networks in the context of enterprise and industry. These networks may be used by different groups of users (engineers, operators, workers, business managers). Each of these groups of users requires a different view of the same network, may use different models to analyze, diagnose and/or emulate operations running in the real communications network or in modifications thereof, information, and real data. They may also request a different set of capabilities among monitoring, configuration, analytics and insights, simulation/emulations etc. Moreover, within each group of users several instances of NDT may be required. For this reason, the method introduces the concept of NDT workspace as a means of sharing common information for a target group of people with a defined higher goal and set of capabilities. Different NDT workspaces may have access to different data models, data granularity and have different access rights to change and manipulate the common or dedicated information.

However, in a group of users part of a same NDT workspace, each individual may opt for experimenting with a different aspect of the network. For instance, several operators sharing one workspace may want to test different cases of experiments. To facilitate simultaneous access to one workspace's resources and capabilities, several NDT instances can be created within a workspace and managed accordingly.

In an embodiment, the method further comprises performing the experiment in the second NDT instance.

In some embodiments, the disclosure provides an apparatus comprising means for:
receiving a request for experiment,
wherein the request for experiment comprises experiment attributes related to an experiment to be performed in a Network Digital Twin of a real communications network;
deriving requirements for component digital twins from the experiment attributes;
discovering at least one component digital twin in a first network digital twin (NDT) instance of the real communications network, wherein the at least one component digital twin satisfies at least one of the requirements for component digital twins, wherein the first NDT instance comprises a first plurality of component digital twins, wherein the component digital twins include at least one of, or are selected among:
   ∘ real data collection modules adapted to collect and store data from the real communications network,
   ∘ computation modules adapted to implement models with the collected data to analyze, diagnose and/or emulate operations running in the real communications network or in modifications thereof;
creating a second NDT instance for performing the experiment,
wherein the second NDT instance comprises a second plurality of component digital twins satisfying all said requirements for component digital twins, said second plurality of component digital twins including the at least one component digital twin discovered in the first network digital twin instance, so that the at least one component digital twin is shared by the first and second NDT instances.

In some example embodiments, the means in the apparatus further comprises:
At least one processor; and
At least one memory including a computer program code, the at least one memory and computer program code configured to, with the at least one processor, cause the operations of the apparatus.

The at least one memory and the computer program code may be configured to, with the at least one processor, cause the apparatus to:
receiving a modification request for modifying a first experiment,
wherein the first experiment is performed by the first NDT instance,
wherein the modification request comprises modification attributes;
deriving requirements for component digital twins from the modification attributes; detecting that the requirements derived from the modification attributes are not fulfilled by the at least one component digital twin discovered in the first network digital twin instance and shared by the first and second NDT instances;
creating a third NDT instance of the real communications network for performing a modified first experiment in response to the modification request, wherein the third NDT instance comprises a third plurality of component digital twins satisfying all said requirements for component digital twins derived from the modification attributes.

The at least one memory and the computer program code may be configured to, with the at least one processor, cause the apparatus to:
discovering at least one component digital twin in a fourth NDT instance of a real communications network, wherein the at least one component digital twin satisfies at least one of the requirements for component digital twins derived from the modification attributes, wherein the fourth NDT instance comprises a fourth plurality of component digital twins,
wherein the third plurality of component digital twins include the at least one component digital twin discovered in the fourth network digital twin instance, so that the at least one component digital twin discovered in the fourth network digital twin instance is shared by the third and fourth NDT instances.

The at least one memory and the computer program code may be configured to, with the at least one processor, cause the apparatus to:
accessing a workspace as a function of a sender of the request for experiment,
wherein the workspace comprises a plurality of NDT instances and defines the following workspace attributes:
   a plurality of component digital twins, selected among real data collection modules and computation modules, which can be used to create an NDT instance in the workspace,
   access rights and identity of users of the workspace,
   a synchronization policy with the real communications network of the plurality of component digital twins, and/or
   computational resources to which the plurality of component digital twins which can be used to create a NDT part of the workspace can have access to;
deriving requirements for component digital twins so that the requirement for component digital twins are fulfilled by the workspace attributes;
wherein the first NDT instance is discovered within the workspace,
wherein the second NDT instance is created within the workspace.

In some example embodiments, the disclosure also provides an apparatus comprising:
A first receiving circuitry configured to receive an request for experiment, wherein the request for experiment comprises experiment attributes related to an experiment to be performed in a Network Digital Twin of a real communications network;
A first deriving circuitry configured to derive requirements for component digital twins from the experiment attributes;
A first discovering circuitry configured to discover at least one component digital twin in a first network digital twin (NDT) instance of the real communications network, wherein the at least one component digital twin satisfies at least one of the requirements for component digital twins, wherein the first NDT instance comprises a first plurality of component digital twins, wherein the component digital twins are selected among:
   real data collection modules adapted to collect and store data from the real communications network,
   computation modules adapted to implement models with the collected data to analyze, diagnose and/or emulate operations running in the real communications network or in modifications thereof;
A first creating circuitry configured to create a second NDT instance for performing the experiment, wherein the second NDT instance comprises a second plurality of component digital twins satisfying all said requirements for component digital twins, said second plurality of component digital twins including the at least one component digital twin retrieved from the first network digital twin instance, so that the at least one component digital twin retrieved from the first network digital twin instance is shared by the first and second NDT instances.

In an embodiment, the apparatus further comprises:
A second receiving circuitry configured to receive a modification request for modifying a first experiment,
   wherein the first experiment is performed by the first NDT instance,
   wherein the modification request comprises modification attributes;
A second deriving circuitry configured to derive requirements for component digital twins from the modification attributes;
A first detecting circuitry configured to detect that the requirements derived from the modification attributes are not fulfilled by the at least one component digital twin discovered in the first network digital twin instance and shared by the first and second NDT i nsta nces;
A second creating circuitry configured to create a third NDT instance of a real communications network for performing the modified first experiment, wherein the third NDT instance comprises a third plurality of component digital twins satisfying all said requirements for component digital twins derived from the modification attributes.

In an embodiment, the apparatus further comprises: A second discovering circuitry configured to discover at least one component digital twin in a fourth NDT instance of a real communications network, wherein the at least one component digital twin satisfies at least one of the requirements for component digital twins derived from the modification attributes, wherein the fourth NDT instance comprises a fourth plurality of component digital twins, wherein the third plurality of component digital twins include the at least one component digital twin discovered in the fourth network digital twin instance, so that the at least one component digital twin discovered in the fourth network digital twin instance is shared by the third and fourth NDT instances

In an embodiment, the apparatus further comprises:
A third accessing circuitry configured to access a workspace as a function of a sender of the request for experiment,
   wherein the workspace comprises a plurality of NDT instances and defines the following workspace attributes: a plurality of component digital twins, selected among real data collection modules and computation modules, which can be used to create a NDT part of the workspace, access rights and identity of users of the workspace, a synchronization policy with the real communications network of the plurality of component digital twins which can be used to create a NDT part of the workspace, and/or computational resources to which the plurality of component digital twins which can be used to create a NDT part of the workspace can have access to;
A third deriving circuitry configured to derive requirements for component digital twins so that the requirement for component digital twins are fulfilled by the workspace attributes; wherein the first NDT instance is discovered within the workspace, wherein the second NDT instance is created within the workspace.

### Brief description of the drawings

For a more complete understanding of example embodiments of the present invention, reference is now made to the following descriptions taken in connection with the accompanying drawings in which:
FIG. 1 shows a functional block diagram according to an example embodiment in which a NDT workspace is created;
FIG. 2 shows a functional block diagram according to an example embodiment in which a NDT instance is created;
FIG. 3 shows a functional block diagram according to an example embodiment in which a NDT instance is fully shared to perform two experiments.
FIG. 4 shows a functional block diagram according to an example embodiment in which a NDT instance is partially shared to perform two experiments.
FIG. 5 shows a functional block diagram according to an example embodiment in which a conflict between two experiments performed thanks to a NDT instance partially shared is detected.
FIG. 6 shows a block diagram depicting the apparatus operating in accordance with an example embodiment;
FIG. 7 represents a schematic view of a communications network in connection with a remote or cloud infrastructure.
FIG. 8 represents a schematic view of a real communications network communicating with an NDT Instance.

In the drawings, the blocks "alt" and "else" depict two branches of an alternative. In others words, those branches are optional.

### Detailed description of embodiments

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequences. Similarly, specific structural and functional details disclosed herein are merely representative for purposes of describing the embodiments. The invention described herein, however, may be embodied in many alternate forms and should not be construed as limited to only the embodiments set forth herein.

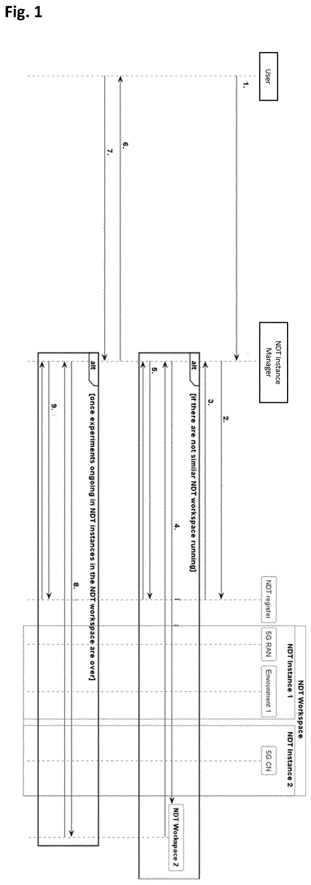

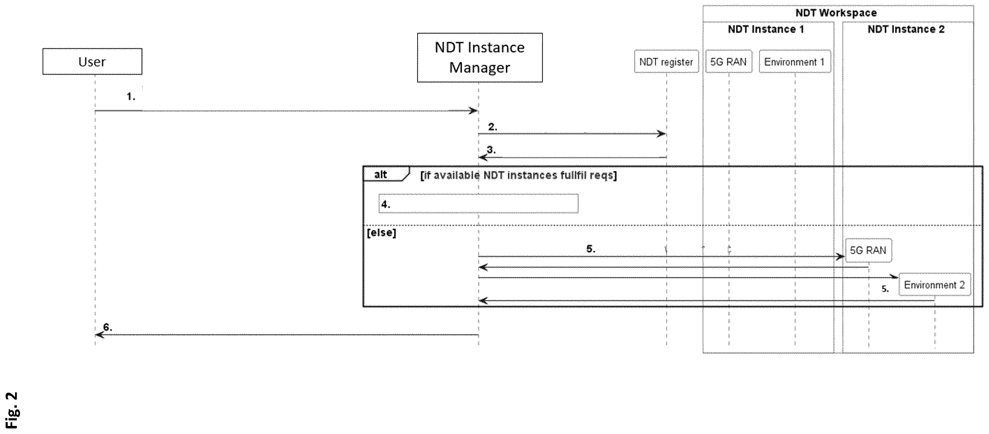

Each drawing depict one example embodiment of the application comprising several steps described in accordance with the considered drawing. Thus, for example, step 1 from the embodiment depicted in FIG. 1 is not necessarily the same as step 1 from the embodiment depicted in FIG. 2. Same applies for all steps depicted in different drawings.

The disclosure relates to apparatuses and methods for performing an experiment in a network digital twin (NDT) of a real communications network.

### NDT Instance Manager

A NDT Instance Manager can be a server capable of receiving and communicating data. It can also run programs to implement any of the method described below. It can also be a computerized module comprising at least one processor; and at least one memory including a computer program code, the at least one memory and computer program code configured to, with the at least one processor, cause the step of any of the methods described below.

### NDT workspace

A NDT workspace is a means of granting similar rights to a group of users that often require a specific view of a NDT instance to facilitate more efficient sharing of NDT instances.

From a most general point of view, a NDT instance is comprised of a collection of models, simulations, databases and all other sources of information required to provide a virtual and updated representation of a real communications network and to allows to analyze, diagnose, and emulate the real communication network. This collection can be categorized into several component digital twin (CDT) responsible for one aspect of the NDT instance. More details about NDT instances will be described further.

Users may request the creation of a new NDT workspace for running their requested experiments. However, a NDT instance can be created without belonging to any workspace.

In the creation request, a user should specify the NDT workspace configuration according to the followings NDT workspace attributes:
- ScopeID: It could be defined by a geographical context, as well as the id address of a certain group of components digital twins bundled together and assigned to one id address. In other words, this parameter identifies the CDTs building the networks.
- AccessDetails: it will describe the access rights for the users in the workspace. The access rights could be as simple as read and write accesses. However, the access details can be described by a set of defined operations, identifiable by their id address and their description of modifications to each and every component digital twin in the NDT.
- SyncRealNetwork: this parameter clarifies the right to synchronize configuration and information from the NDT to the real communication network. Based on that different type of NDT instance could be instantiated or not in the NDT workspace. For example, it could be set to 0 if only synchronization from the real network to the NDT instances is allowed, or 1 if bidirectional sync is allowed (i.e., also from the NDT to the real communication network).
- UserIDs: It is the ids addresses of the users who have access to the rights provisioned by this workspace.
- Lifespan: It declares a limited time for the existence of the workspace. For instance, a workspace that is created to grant access rights to remote configuration of a faulty device can be open for a limited amount of time of maintenance and shall be closed/deleted automatically after the estimated lifespan is over.
- MaxUnusedTime: a NDT workspace can be deleted if no operations, instances or experiments are run in the NDT workspace and/or if the NDT workspace has reached its MaxUnusedTimePeriod.
- EnviromentDescription: The environment properties and models (set of models, their address ids and information) that one workspace shall have access to manipulate, add or remove.
- NDTWorkspaceResources: The resources the workspace should have access to. Resources could be GPU/CPU, cloud resources, etc.

A NDT workspace configuration can also include the needed view over the real communication network that allows the experiments' implementation. This includes the list of real entities that should be accessible, type of access requested (write, modify, read, etc.), group of users that can access the NDT workspace, and environment details.

Moreover, the NDT workspace can be configurable in terms of modification or users, rights and view of the network by an authorized user of the service.

Different NDT workspaces provide different views of the mobile network over which a user is interested in running its experiments.

According to an embodiment, a NDT workspace creation process can be implemented by the NDT Instance Manager as illustrated at Fig. 1.

At Step 1, a user requests the NDT Instance manager to create a new NDT Workspace. The request specifies among other NDT workspace attributes above described, the NDT workspace capabilities.

At step 2, the NDT Instance Manager sends a request to a NDT register comprising all the running NDT workspaces to discover running NDT workspaces.

At step 3, The NDT register provides to the NDT Instance Manager the running NDT workspaces.

At step 4, if there are not running NDT workspaces that fulfill user's request and there are enough resources available, the NDT Instance Manager creates a new NDT workspace.

On the contrary, if there is a running NDT workspace that fulfills user's request, the NDT register provides to the NDT Instance Manager the handler of the running NDT workspace. Thus, the NDT Instance Manager can access the running workspace.

At step 5, the NDT Instance Manager registers the new creates NDT workspace to the NDT register.

At step 6, the NDT Instance Manager provides to the user the Workspace ID address of the NDT workspace created. If the returned Workspace ID is from an already running NDT workspace, the NDT Instance manager informs the user that the returned ID is from an existing workspace.

When a workspace is created by the NDT instance manager, this latter replies to the user which ask for its creation with the Workspace address id and confirms the rights granted and the scope defined as a report for the creation request.

A NDT workspace can also be deleted as illustrated at Fig. 1.

At step 7, a user requests to delete an existing NDT workspace by providing to the NDT Instance Manager the Workspace ID address of the NDT workspace to be deleted.

At step 8, once the experiments running within the NDT instances instantiated in the NDT workspace are over, the NDT Instance manager proceeds with the workspace deletion. While waiting for the termination of the running experiments, the NDT instances in termination process will not accept new experiments.

At step 9, the NDT Instance manager deregisters the deleted NDT workspace from the NDT register.

### NDT instance

A NDT instance is a means of providing the NDT capabilities for running a experiment or a set of experiments.

From a most general point of view, a NDT instance is comprised of a collection of models, simulations, databases and all other sources of information required to provide a virtual and updated representation of a real communications network and to allow to analyze, diagnose, and emulate the real communication network.

This collection of models, simulations, databases and all other sources of information required can be encapsulated in different component digital twins (CDT) each responsible for one of the several aspect of the NDT instance. The component digital twins are blocks of the NDT instance which together form the NDT instance.

### Component digital twin

Thus, a NDT instance comprises, or is composed of, a plurality of component digital twins (CDT) that make together a network digital twin.

A component digital twin can be identified by a set of IDs stored in the NDT register or be requested from the NDT instance as metadata information of the NDT instance.

The component digital twins are selected among:
real data collection modules adapted to collect and store data from the real communications network,
computation modules adapted to implement models with the collected data to analyze, diagnose and/or emulate operations running in the real communications network or in modifications thereof;

The real data collection modules adapted to collect and store data from the real communications network to build the data storage: the data storage includes all the collected data from the real network. This real data database is updated with the arrival of any new collection. The common operation for this database is the reading of the data.

Types of data included in the data storage can be related to configurations, operational states, topology, traces, key performance metrics, etc. The data may also vary in the level of detail (i.e., packet level, time slot level, user level, etc.) as well as in the time scale in which it is gathered (e.g., milliseconds, seconds, minutes, etc.). This depends on the purpose of the NDT instance (e.g., training a RL model at the MAC layer operating at millisecond time scales or a RRM policy operating in the order of minutes) and the required data by the different models in the NDT instance.

The data storage can also include information regarding the environment of the real communications network such as the objects' location, material, properties etc. This database is less prone to changes of data due to the nature of the information.

The writing of new data in the real data database can be manually triggered or automated according to a synchronization policy, i.e. not under the direct influence of the users of the NDT instance.

### Computation models

The computation modules adapted to implement models with the collected data to analyze, diagnose and/or emulate operations running in the real communications network or in modifications thereof can be selected. In other words, the computational modules are adapted to implement different models for representing the various elements and functionalities of the real communications network.

These models can be selected among the followings:
- Scenario topology model: covers the topographic information of the real communications network area considered for the NDT instance, such as detailed maps including buildings, streets, parks etc.
- Network model: emulates the behaviour of the network nodes (for example, 5G nodes) including aspects such as their deployment information (e.g., node position, node height), configuration (e.g., operating frequency, bandwidth configurations, numerologies, beamforming model) and operation (i.e., packet conformance at different levels, etc.).
- UEs model: emulates the behaviour of Users Equipment (UEs) capturing physical aspects such as their position, height, antenna gain or the noise figure but also others such as the UE type (e.g., pedestrian, vehicular, sensor) and/or the UE Quality of Service (QoS) requirements (e.g., minimum bit rate, latency, reliability).
- Channel model: characterizes the links between the UEs and the nodes of the network, considering the effect of propagation loss, interference or noise in accordance with the parameters of UEs and network nodes in the NDT (e.g., antenna heights, gains, noise figure, etc.).
- Network slices model: for systems with multiple slices, this module embraces all aspects related to their characterization. For each slice, this may include the UEs belonging to the slice, the Service Level Agreement (SLA) to be guaranteed and per-slice parameters to be considered in the scenario.
- Traffic generation model: allows emulating a realistic behaviour of the traffic demand in the real communications network at different levels (e.g., packet, user, service, network slice or system levels), accounting for the temporal and spatial distributions in the considered communications network area. The traffic generation can be either based on available models in the literature (e.g., session generations according to a Poisson distribution and session durations modelled by an exponential distribution) or on geo-localized traces and measurement reports generated by UEs during their connection to the network. The traffic generation model can interact with the UEs model to generate new UE sessions.
- Mobility model: emulates how the users move in the real communications network area, characterizing their trajectories and speed. Different models can be defined for the existing user types in the communications network area (e.g., pedestrian, vehicular, static, drones, etc.). This model can interact with the UEs model to modify the UE's positions and takes into account the scenario topology model for users' trajectories (e.g., pedestrian users usually walk on the pavement while vehicles drive on the road).
- Propagation model: allows generating different radio propagation conditions, capturing effects such as path loss, attenuations due to diffraction and rain, shadowing or fast fading.
- management and optimization models that are applied in the real communication network and, thus, impact the real communications network behaviour. This includes RRM policies (e.g., admission control, resource allocation, packet scheduling, etc.), optimization functions at network level (e.g., interference coordination, handovers) and SON functions (e.g., capacity and coverage optimization, mobility load balancing, cross-slice capacity optimization, etc.).
- models for exploiting the outputs of the rest of the above described models. For example, a Key Performance Indicator (KPI) reporting model, which generates reports with KPI metrics of interest (e.g., resources utilization, throughput, QoS satisfaction, etc.), a analysis model, for processing the obtained KPls to assess the performance of the different NDT models, and a visualization model, which can provide different kind of graphs such as the evolution of different KPIs, coverage maps of the different nodes of the real network included in the NDT instance.

All the previous mentioned models can be analytical models, simulators, or machine learning based models (ML models). The selection of one or another approach can depend on different aspects such as the availability of data (i.e., if there are not any available data, an ML model cannot be trained), the level of complexity of the selected approach or the required accuracy in the NDT instance. For instance, the traffic generation model in an NDT of the RAN can be approached as a ML model trained based on real data. However, if not enough data are available for the training of the ML approach, the model can also be designed as a simulator, whose parameters can be fine-tuned to adapt to real data collected from the real communications network.

A NDT instance can be part of a NDT workspace.

In this case, NDT instances exist within one NDT workspace and can inherit part or all of the access rights of their NDT workspace. In other words, the NDT instance can only inherit the rights already granted to the NDT workspace it belongs to, thus it is a lesser or equal version of its NDT workspace.

### NDT Register

A NDT instance is registered in an NDT Register with the following NDT instance attributes:
- Instanceld: The identifier of the NDT instance provisioning the handlers necessary to access the instance.
- Workspaceld: If the NDT instance belongs to a workspace, the workspaceld is the identifier of the workspace the NDT instance has been created in. An NDT instance can only inherit the capabilities of its workspace.
- InstanceType: This attribute shows whether the instance is shared with other users, or it is a dedicated instance.
- ExperimentIDs: it is the list of ids addresses for the experiments running on this NDT instance. Each experimentld corresponds to one request for the instance described in the ExperimentDetails attribute in the request.
- Userlds: It is the list of the ids addresses of the users that have access to the NDT instance or might use the instance due to having access to the instance. This attribute is not time dependent and does not show the real time users of the instance but the users having access to use the instance.
- InstanceStatus: This attribute provides information on the status of the allocated resources in the instance such as the free disk space, number of cores, GPU, etc.

The NDT Instance Manager can discover a NDT instance by getting the handler of it from the NDT Register. For example, the NDT instance Manager sends a request for a running NDT instance to the NDT Register to discover it; then the NDT Register sends back to the NDT instance Manager the handler of the running NDT Instance.

According to an embodiment, a NDT instance creation process can be implemented by the NDT Instance Manager as illustrated at Fig. 2.

At step 1, a user requests access to an NDT instance from the NDT Instance Manager to execute its experiments. In other words, the user sends a request for experiment to the NDT instance manager.

### Experiment attributes

In the request for experiment, the user specifies experiment attributes of the experiment to be executed.

For example, the experiment attributes comprise: user ID address, the minimum capabilities for the NDT instance to be created to run the experiments, the experiment details, the type of the NDT instance meaning if the NDT instance should be private or if sharing is allowed, and the timing related information.

The experiment details provide a description of the experiment that the NDT instance is meant to perform. The description can comprise the following details:
- Experimentld: The identifier of the experiment defined by the experiment details.
- ExperimentScope: This attribute shows the scope of the experiment. The scope of the experiment can be clarified by a geographical context, a set of component digital twins, a particular window of time in the past, etc. This attribute can be used to define the rights and modifications needed for the experiment. The more detailed and granular the scope is defined, the higher the efficiency of the instance manager in creation and sharing of instance will be.
- ExperimentPriority: This attribute is a user-specific attribute that only provides flexibility in allocation of instances between the experiments of one user. In cases where one user may have several experiment requests, the priority shall provide the means of provisioning for one experiment over the other.
- ExperimentOperations: This attribute shows the set of modifications and operations that will be executed on the NDT instance. They could be coarse in terms of variety such as read, write and modify of the component digital twin or more elaborate in terms of particular operations that will be done in the experiment. The more detailed these operations are defined, the better the pooling of compatible experiments into one instance and sharing can be done
- EnvironmentDescription: It refers to the all the environment related information (i.e., network map, model, real-time data, etc.) that are needed for the particular experiment in the request for experiment.

### Additional attributes

A request for experiment can comprise the following additional attributes:
- SharedlnstanceAllowed: This attribute allows the NDT instance manager to create a shared NDT instance for the experiment in question. In case, it is set to False it shall create a dedicated and private NDT instance.
- NDTInstCap: This attribute allows the consumer to specify the minimum requested NDT instance capabilities for running the experiments as for example computational resources (GPUs or CPUs), cloud resources, etc
- TimingInformation: This attribute allows the consumer to specify at least one of the following time related NDT instance characteristics:

ExperimentDueTime: It refers to the latest time the consumer expects to be done with the experiment.

ExperimentLatestStartTime: This attribute is relating to the amount of time the consumer is willing to wait or compromise until it can be allocated an instance. This attribute is an alternative or complement to the ExperimentDueTime attribute.

ExperimentLifespan:The duration that the consumer needs access to the experiment. This attribute provides the necessary information for assigning the proper period of access to the instances.

ExperimentTimePeriod: It refers to the time period during which the consumer is granted access to run its experiments, i.e., the period in which is going to utilize the NDT instance. This information allows the NDT Instance Manager to share the same NDT instance between multiple consumers in different time intervals.

The experiment attributes may be mentioned as plain text in one attribute and, in this embodiment, a natural language process (NLP) may be used by the NDT instance Manger to parse the information
At step 2, the NDT Instance manager discovers running NDT instances by verifying the consumer ID at the NDT register.

At step 3, the NDT register returns to the NDT instance manager the descriptions and handlers of the NDT instances that are accessible by the user.

At step 4, the NDT instance manager derives requirements for component digital twins from the experiment attributes, and if any of the already existing NDT instances fulfills the requirements, i.e. comprises component digital twins fulfilling the requirements, the NDT instance manager selects the NDT workspace and the NDT instance handler to be returned to the user consumer.

In an embodiment, to derive requirements for component digital twin from the experiment attributes, a semantic model may be used by the NDT instance Manager to correlate the requirements for component digital twins from the experiment attributes and available NDT instance, component digital twin and/or computational resources.

During the selection, the NDT instance manager also verifies that granting access to an existing NDT instance will not impact running or planned experiments from other user. Thus, a running NDT instance is selected only if there are no conflicts between the different consumers' experiments that should run on the same NDT instance.

At step 5, the NDT instance manager derives requirements for component digital twins from the experiment attributes, and if there are not running NDT instances on which the user can run the required experiments, i.e. not any NDT instances is composed of component digital twins fulfilling the requirements and/or not enough resources are available, then the NDT instance manager creates a new NDT instance.

### Requirements for component digital twin

The requirements for component digital twin can comprise:
- computational resources to which the component digital twins must have access to,
- synchronization policy to collect data from the real communications network,
- description of the environment of the real communications network, and/or
- time period during which the component digital twins must be available for the second NDT instance.

The synchronization policy can define :
- unidirectional synchronization only from the real network to the NDT instances is allowed, or
- bidirectional synchronization is allowed (i.e., also from the NDT to the real network).

At step 6, the NDT instance manager returns to the user the NDT instance handler to be utilized for running the described experiments. The NDT instance handler will be valid only during the specified experiment time period and expire when the period for running the experiments is over.

If a NDT workspace has been created, the NDT instance may be created within an existing NDT workspace which the user consumer has access to, or if needed a new NDT workspace may be created as well. In this case, user should allow the instantiation of a new NDT workspace following the procedure described above and at step 6, the NDT instance manager returns to the user the NDT workspace ID address.

### Problem to be solved

As described above, there are currently no means of provisioning NOT capabilities to different users in an organized and authorized manner to facilitate the simultaneous existence of different experiments and sharing of NDT capabilities, efficiently while avoiding any harmful interactions.

Indeed, the conventional approach to run a plurality of experiment in NDT instances is to create a new NDT per experiment (i.e., replicating all entities, enabling separate versions of the same requirements, data and models every time.

This approach is far from efficient in terms of allocation of resources, impact over the mobile network operations (load generated to create and maintain NDTs synchronized), and energy efficiency.

### Solution

This is why, the disclosure provides the NDT Instance Manager which is provided to enable the authorization, sharing and execution of multiple NDT instances in an efficient (from resources and energy consumption point of view) manner.

### Full sharing

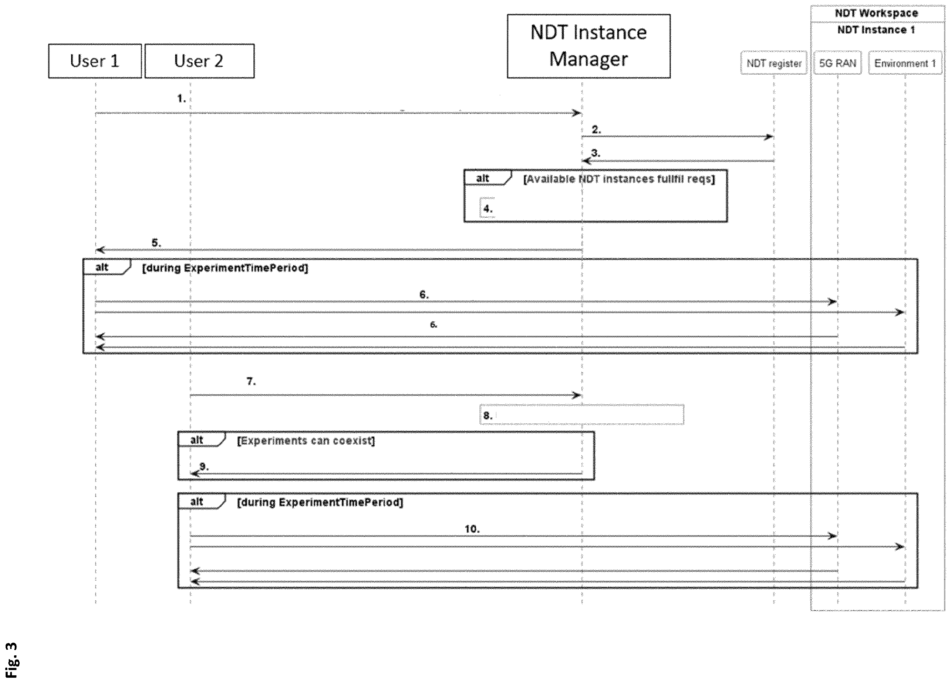

First, according to an embodiment depicted in Fig. 3, the NDT Instance Manager allows a full sharing of a NDT instance:

At step 1, a first user sends to the NDT Instance Manager a request to get access to an NDT Instance in order to execute its experiments, i.e. the first user sends a request for experiment to the NDT Instance Manger. In the request, the consumer specifies the experiment attributes. For example, its consumer ID, the minimum NDT instance capabilities to run the experiments, the experiment details, and timing related information. A detailed description of the experiment attributes have been described above.

At step 2, the NDT Instance manager discovers running NDT instances by verifying the user ID at the NDT register.

At step 3, the NDT register returns to the NDT instance manager the descriptions and handlers of the NDT instances that are accessible by the user.

At step 4, the NDT instance manager derives first requirements for component digital twins from the experiment attributes, and a running NDT instance fulfills the requirements, so the NDT instance manager selects the NDT instance handler to be returned to the user.

During the selection, the NDT instance manager also verifies that granting access to an existing NDT instance will not impact running experiments from other user. Thus, a running NDT instance is selected only if there are not conflicts between consumers' experiments that should run on the same NDT instance. This verification is made with the time related requirement for component digital twin.

At step 6, the NDT instance manager returns to the user the NDT instance handler to be utilized valid only for the specified ExperimentTimePeriod.

The user during the requested time period, starts using the NDT instance for the requested experiments and receives the respective outputs.

At step 7, a second user requests access to an NDT instance for running its experiments, i.e. send a request for experiment to the NDT instance Manager.

At step 8, the NDT Instance manager derives second requirements for component digital twins from the experiment attributes and verifies if the described experiment, i.e. the experiment attributes, may coexist with running experiments run by other users and selects the proper NDT instance if available according to the requirement for component digital twin derived. In case no running NDT instances fulfill the requirements, a new NDT instance may be instantiated as described in the above embodiment.

At step 9, since the first requirements for component digital twin derived from the request for experiment of the first user 1 and the second requirements for component digital twin derived from the request for experiment of the second user can coexist, at the time specified by second user, the NDT instance manager returns to the second user the NDT instance handler.

The coexistence could be in time, e.g., first and second user have requested the NDT instance in not overlapping time periods, or could be in usage, e.g., the second user is using the NDT instance for predictions without changing any configuration.

At step 10, the second user, during the requested time period, starts its experiments in the shared NDT instance and receives the respective outputs.

This full sharing allows saving allocation of resources and energy, limiting impact over the mobile network operations and therefore solves the drawbacks of the start-of-art solutions.

### Partial sharing

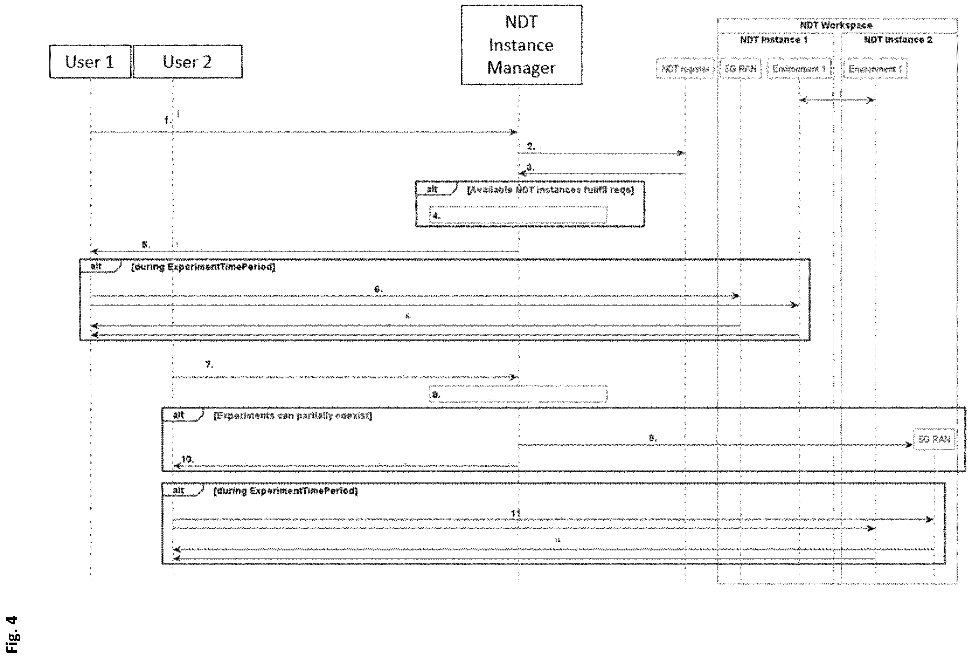

Secondly, according to an embodiment depicted in Fig. 4, the NDT Instance Manager allows a partial sharing of a NDT instance.

At step 1, a first user sends to the NDT Instance Manager a request to get access to an NDT Instance in order to execute its experiments, i.e. the first user sends a request for experiment to the NDT Instance Manger. Thus, the NDT Instance Manager receives a request for experiment. In the request, the consumer specifies the experiment attributes. For example, its consumer ID, the minimum NDT instance capabilities to run the experiments, the experiment details, and timing related information. A detailed description of the experiment attributes have been described above.

Then, the NDT instance Manager discovers running NDT instances accessible by the first user. For example, as depicted in FIG. 4, at step 2, the NDT Instance manager discovers running NDT instances verifying the first user ID at the NDT register. Then, at step 3, the NDT register returns to the NDT instance manager the descriptions and handlers of the NDT instances that are accessible by the first user. The NDT instance Manager has now discovered the running NDT instances accessible by the user.

At step 4, the NDT instance manager derives first requirements for component digital twins from the first experiment attributes and running NDT instance fulfills, so the NDT instance manager selects the NDT instance handler to be returned to the first user. During the selection, the NDT instance manager also verifies that granting access to an existing NDT instance will not impact running experiments from other user. Thus, a running NDT instance is selected as the first NDT instance only if there are no conflicts between consumers' experiments that should run on the same NDT instance. Conversely, if none of the running NDT instances accessible by the user fulfills the first requirements, the NDT instance manager shall create a new NDT instance as the first NDT instance.

At step 5, the NDT instance manager returns to the first user the first NDT instance handler to be utilized valid only for the requested ExperimentTimePeriod.

At step 6, the first user during the requested time period, starts using the NDT instance for the requested experiments and receives the respective outputs.

At step 7, a second user requests access to an NDT instance for running its experiments, i.e. sends a second request for experiment to the NDT instance Manager comprising experiment attributes. The NDT instance Manager receives a new request for experiment from the second user.

At step 8, the NDT Instance manager derives second requirements for component digital twins from the second experiment attributes of the request for experiment of the second user.

For now, steps 1 to 8 are similar to the embodiments relative to the creation or to a full sharing of an NDT instance.

In this embodiment, the NDT Instance Manager discovers in the first NDT Instance at least one component digital twin satisfying at least one of the second requirements for component digital twins.

For example, as depicted in FIG. 4, at step 9, the NDT instance manager detects that the first and second requirements for component digital twins derived from the first experiment attributes and the second experiment attributes may partially coexist in the first NDT Instance, meaning that at least one component digital twin of the first NDT Instance can be reused while others cannot or should be private. In other words, the NDT instance manager retrieves the component digital twin ID from the NDT register or from the first NDT instance and can then use it to create a new NDT instance.

Then, the NDT instance Manager creates a second NDT instance for performing the experiment of the second user. This second NDT instance comprises a plurality of component digital twins including the at least one component digital twin discovered in the first NDT instance.

For example, in this option, a component digital twin relative the environment of the real communication network can be shared between the experiment while a component digital twin relative to the 5G network behaviour of the real communication network cannot since both consumers are testing different configurations in overlapping time periods. In this case, the NDT instance manager creates a second NDT instance with a new component digital twin relative to the 5G network behaviour and the same component digital twin relative the environment of the real communication network employed by the first NDT instance used by the first user.

Thus, the at least one component digital twin is shared between the first and second NDT instances.

This partial sharing also allows saving allocation of resources and energy, limiting impact over the mobile network operations and therefore solves the drawbacks of the start-of-art solutions.

At step 10, the NDT instance manager returns the second NDT instance handler to the second user valid only for the requested time period.

At step 11, the second user during the requested time period, starts its experiments and receives the respective outputs.

### Experiment modification

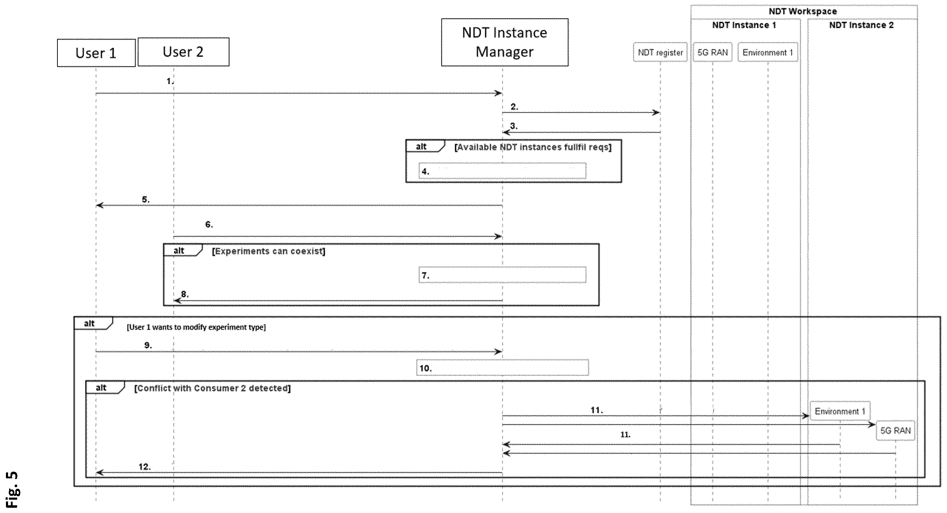

Thirdly, according to an embodiment depicted in Fig. 5, the NDT Instance Manager allows the management of request for modifying an experiment run in a NDT instance partially shared.

At step 1, a first user sends to the NDT Instance Manager a request to get access to an NDT Instance in order to execute its experiments, i.e. the first user sends a request for experiment to the NDT Instance Manger. In the request, the consumer specifies the experiment attributes. For example, its consumer ID, the minimum NDT instance capabilities to run the experiments, the experiment details, and timing related information. A detailed description of the experiment attributes have been described above.

Then, the NDT instance Manager discovers running NDT instances accessible by the first user. For example, at step 2 of FIG. 4, the NDT Instance manager discovers running NDT instances verifying the first user ID at the NDT register.

At step 3, the NDT register returns to the NDT instance manager the descriptions and handlers of the NDT instances that are accessible by the first user.

At step 4, the NDT instance manager derives first requirements for component digital twins from the first experiment attributes and running NDT instance fulfills, so the NDT instance manager selects the NDT instance handler to be returned to the first user. During the selection, the NDT instance manager also verifies that granting access to an existing NDT instance will not impact running experiments from other user. Thus, a running NDT instance is selected only if there are no conflicts between consumers' experiments that should run on the same NDT instance.

At step 5, the NDT instance manager returns to the first user the first NDT instance handler to be utilized valid only for the requested ExperimentTimePeriod.

At step 6, the first user during the requested time period, starts using the NDT instance for the requested experiments and receives the respective outputs.

At step 7, a second user requests access to an NDT instance for running its experiments, i.e. send a request for experiment to the NDT instance Manager comprising experiment attributes.

At step 8, the NDT Instance manager derives second requirements for component digital twins from the second experiment attributes of the request for experiment of the second user.

In this embodiment, the NDT instance manager detects that the first and second requirements for component digital twins derived from the first experiment attributes and the second experiment attributes may partially coexist

The NDT instance manager creates a second NDT instance with a component digital twin partially shared as described above and returns to the second user the handler of the second NDT Instance.

For now, steps 1 to 8 are similar to embodiments relative to partial sharing.

In this embodiment, the NDT instance Manager receives a modification request for modifying the first experiment performed in the first NDT instance.

For example, at step 9, the first user would like to modify the type of experiment that it is executing in the first NDT instance. For this reason, it informs the NDT instance manager specifying the NDT instance handler and the updated ExperimentDetails (along with the updated NDT instance request attributes), i.e. the first user send a modification request for modifying the first experiment.

At step 10, the NDT Instance manager derives requirements for component digital twins from the modified experiment attributes of the request for modifying the first experiment of the first user and checks if the modified first experiment can coexist with running experiments executed on the same NDT Instance, for example, the second experiment.

At step 11, the NDT Instance manager detects that requirements for component digital twins derived from the modified experiment attributes cannot coexist with the second requirement of the second experiment and that no running NDT instances fulfill the requirements.

Thus, the NDT instance manager create a new NDT instance since the experiment cannot longer coexist. The NDT instance manager may select another available running NDT instance on which the experiment could be safely executed according to a partial or full sharing described above. In case no running NDT instance are available a new NDT instance may be created according to the embodiment described above.

Thus, the NDT instance Manager can create a new NDT instance or identify a existing NDT instance to be partially or fully shared.

In case of a partial sharing, the NDT instance Manager creates a third NDT Instance by implementing the following process similar to the partial sharing embodiment above described and depicted at FIG. 4:
accessing a fourth NDT instance of a real communications network, wherein the fourth NDT instance comprises a fourth plurality of component digital twins,
retrieving from the fourth network digital twin instance at least one component digital twin satisfying at least one of the requirements for component digital twins derived from the modification attributes,
wherein the third plurality of component digital twins include the at least one component digital twin retrieved from the fourth network digital twin instance, so that the at least one component digital twin retrieved from the fourth network digital twin instance is shared by the third and fourth NDT instances.

At step 12, the NDT instance manager returns the new NDT instance handler to the first user over which the first user can execute the modified first experiment and valid only for the requested time period.

### Workspace

The three above described embodiments can be implemented in a same NDT workspace.

In particular, the embodiment relative to a partially shared NDT instance, the NDT Instance Manager can implement the following process:
- accessing a workspace as a function of a sender of the request for experiment, wherein the workspace comprises a plurality of NDT instances and defines the following workspace attributes:
   a plurality of component digital twins, selected among real data collection modules and computation modules, which can be used to create a NDT part of the workspace,
   access rights and identity of users of the workspace,
   a synchronization policy with the real communications network of the plurality of component digital twins which can be used to create a NDT part of the workspace, and/or
- computational resources to which the plurality of component digital twins which can be used to create a NDT part of the workspace can have access to;
- deriving requirements for component digital twins so that the requirement for component digital twins are fulfilled by the workspace attributes; wherein the first NDT instance is accessed within the workspace, and wherein the second NDT instance is created within the workspace.

In particular, when a new NDT instance is created by the NDT instance Manager, this new NDT instance can belong to a NDT workspace to which a Workspace address Id is associated. In this case, the NDT instance Manager specifies to the user if the Workspace address Id belongs to a newly created NDT workspace or an existing one by specifying its status as new or existing. This information may also be relayed otherwise by including the creation time of the NDT workspace in the report.

### Advantages of the solution

The novel NDT Instance Manager is responsible for ensuring that the above conditions and situations in NDT are satisfied. In particular, it is responsible for:
- Creating new NDT workspaces and NDT instances for group of users and managing access authority and capability. The access to the created NDT workspaces and NDT instances may be private to the requesting consumer or shared among group of users that have access to the specified NDT workspace depending on the requirements of the requested experiment use case.
- Providing access to an existing NDT instance/workspace upon receiving a request for an NDT instance or workspace to run a particular experiment from an authorized consumer.
- Fulfilling a request for an experiment by providing necessary handlers to a allocated and configured NDT instance. If the NDT belongs to a NDT workspace, the NDT Instance manager is also provide handlers of this NDT workspace.
- Deletion of NDT instances and/or NDT workspaces that may no longer be required or have served their purpose (it could be an intent, a sort of automated garbage collection, or any type of direct goal).

In addition, the NDT instance Manager solves the drawbacks by ensuring an exact and sufficient needed isolation required for simultaneous existence of several experiments by any of the following means:
- Creating a new dedicated NDT instance or NDT workspace
- Creating a partially shared NDT Instance comprising of parts - component digital twin - of an existing NDT instance based on the existing resources, the request conditions, and possibilities.
- Fully sharing an NDT instance by allocation of separate working time slot to different users when there is a conflict in the simultaneous use of the NDT instance.
- Fully sharing an NDT instance be during the same time period if the experiment attributes and the requirements for component digital twin derived from are not in conflict. For example, experiment purposes such as monitoring, prediction, etc.
- Providing information about existing NDT workspaces or NDT instances upon request. An authorized user shall be able to request a report on existing NDT workspace or NDT instance.

As detailed in the embodiments above, shared NDT instance may be implying a partial or fully shared instance. A partially shared NDT instance could have only one or a few common CDTs. This shared component digital twin (CDT) can be the environment or CDTs of the network that are only partially shared in the instance. In case an instance is fully shared, it is due to the fact that the conditions in the instance request allow for this sharing. For instance, one NDT instance may be fully shared in different time intervals without any interference. Another example is that one instance is only requesting the monitoring of the network and environment without manipulation of the information and the other is maybe using the instance to predict some factors based on the current network conditions.

In shared scenarios, embodiments of the method allow for a level of flexibility. For instance, a user of a shared NDT instance can send a request for modification to the NDT instance Manager of its shared instance in which case the NDT instance manager reassess the modifications request as a new request for experiment and verifies the compatibility with the other experiments running on the NDT same instance.

In case the request for modification is not compatible, the NDT instance manager checks for a potential candidate among the existing NDT instance, in case an NDT instance is not available and there are available resources, the NDT instance manager will create a new instance for the consumer request accordingly.

### Others

The term "user" or "consumer" refers to a user of the service.

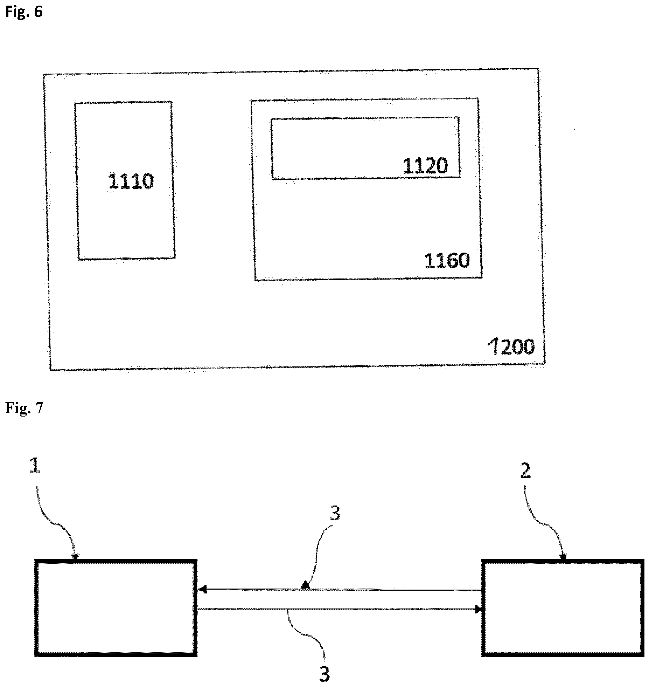

Figure 6 is a block diagram depicting the apparatus 1200 operating in accordance with an example embodiment described above. The apparatus 1200 may be, for example, an electronic device such as a chip, chip-set, an electronic device or an access network controller. The apparatus 1200 includes a processor 1110 and a memory 1160. In other examples, the apparatus 1200 may comprise multiple processors.

In the example of Figure 6, the processor 1110 is a control unit operatively connected to read from and write to the memory 1160. The processor 1110 may also be configured to receive control signals received via an input interface and/or the processor 1110 may be configured to output control signals via an output interface. In an example embodiment the processor 1110 may be configured to convert the received control signals into appropriate commands for controlling functionalities of the apparatus.

The memory 1160 stores computer program instructions 1120 which when loaded into the processor 1110 control the operation of the apparatus 1200 according to the different embodiments explained above. In other examples, the apparatus 1200 may comprise more than one memory 1160 or different kinds of storage devices.

Computer program instructions 1120 for enabling implementations of example embodiments of the invention or a part of such computer program instructions may be loaded onto the apparatus 1200 by the manufacturer of the apparatus 1200, by a user of the apparatus 1200, or by the apparatus 1200 itself based on a download program, or the instructions can be pushed to the apparatus 1200 by an external device. The computer program instructions may arrive at the apparatus 200 via an electromagnetic carrier signal or be copied from a physical entity such as a computer program product, a memory device or a record medium such as a Compact Disc (CD), a Compact Disc Read- Only Memory (CDROM), a Digital Versatile Disk (DVD) or a Blu-ray disk.

According to an example embodiment, the apparatus 1200 comprises means, wherein the means comprises at least one processor 1110, at least one memory 1160 including computer program code 1120, the at least one memory 1160 and the computer program code 1120 configured to, with the at least one processor 1110, cause the performance of the apparatus 1200.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with an example of a computer described and depicted in Figure 6. A computer-readable medium may comprise a computer-readable storage medium that may be any media or means that can contain or store the instructions for use by or in connection with an instruction execution system, apparatus, or device, such as a computer.

With reference to FIG. 7, a communications network 1 is in communication with a remote infrastructure 2, the remote infrastructure 2 being on-premise or being deployed in a cloud. The communications network 1 transmits a data stream 3 to the remote infrastructure 2. The remote infrastructure 2 also transmits a data stream 3 to the communications network 1.

The communication network 1 can be in communication with several remote infrastructures 2. Users or consumers of the above-described method can use a remote infrastructure 2 to communicate with the NDT instance Manager via the communications network 1.

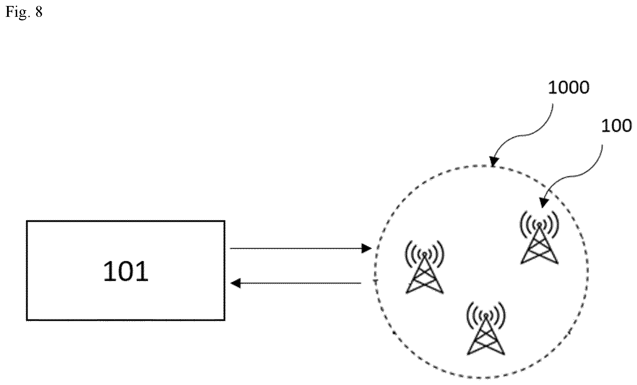

With reference to FIG. 8, a real communication network 1000, comprising antenna 100, exchanges data with an NDT instance 101. The data exchanged have been described above.

The NDT instance 101 is a digital twin of the real communications network 1000. The NDT instance 101 can be located in a server, e.g. connected to communications network 1.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

## Claims

1. A method for performing an experiment in a network digital twin (NDT) of a real communications network, comprising:
- a NDT Instance Manager receives a request for experiment,
wherein the request for experiment comprises experiment attributes related to the experiment to be performed in a Network Digital Twin of a real communications network;
- the NDT Instance Manager derives requirements for component digital twins from the experiment attributes;
- the NDT Instance Manager discovers at least one component digital twin in a first network digital twin (NDT) instance of the real communications network, wherein the first network digital twin (NDT) instance is a first running NDT instance; wherein the at least one component digital twin satisfies at least one of the requirements for component digital twins, wherein the first NDT instance comprises a first plurality of component digital twins,
wherein the component digital twins are selected among:
∘ real data collection modules adapted to collect and store data from the real communications network,
∘ computation modules adapted to implement models with the collected data to analyze, diagnose and/or emulate operations running in the real communications network or in modifications thereof;
- the NDT Instance Manager creates a second NDT instance for performing the experiment, wherein the second network digital twin (NDT) instance is a second running NDT instance, wherein the second NDT instance comprises a second plurality of component digital twins satisfying all said requirements for component digital twins, said second plurality of component digital twins including the at least one component digital twin discovered in the first network digital twin instance, so that the at least one component digital twin is shared by the first and second running NDT instances.

2. A method according to the preceding claim, wherein the experiment attributes comprise:
parameters describing computational resources to which the component digital twins must have access to,
synchronization requirements to collect data from the real communications network, and/or
time requirements of the experiment.

3. A method according to the preceding claim, wherein the time requirements of the experiment comprise:
time schedule of the experiment,
lifespan of the experiment
latest time the experiment is expected to be achieved, and/or
waiting time accepted before the experiment starts

4. A method according to any of the preceding claims, wherein the requirements for component digital twins comprise:
computational resources to which the component digital twins must have access to,
a synchronization policy to collect data from the real communications network,
a description of the environment of the real communications network, and/or a time period during which the component digital twins must be available for the second NDT instance.

5. A method according to any of the preceding claims wherein the computation modules adapted to implement models with the collected data to analyse, diagnose and/or emulate operations running in the real communications network or in modifications thereof are selected among:
models adapted to cover topographic information of the real communications network, models adapted to emulate a behaviour of a base station of the real communications network and/or a interworking with another real communications network,
models adapted to emulate a behaviour of users equipment of a real communications network,
models adapted to characterize links between a equipment and a base station of the real communications network,
models adapted to characterize slices of the real communications network,
models adapted to emulate a behaviour of a traffic demand of the real communications network at different levels accounting for a temporal and spatial distributions in the real communications network,
models adapted to characterize a mobility of users of the real communications network, models adapted to generating different radio propagation conditions, capturing effects, such as path loss, attenuations due to diffraction and rain, shadowing or fast fading, of the real communications network,
models adapted to emulate management and optimization models that are applied in the real communications network, and
models adapted to exploit outputs of the others models.

6. A method according to any of the preceding claims,
the method further comprising:
receiving a modification request for modifying a first experiment,
wherein the first experiment is performed by the first NDT instance,
wherein the modification request comprises modification attributes;
deriving requirements for component digital twins from the modification attributes;
detecting that the requirements derived from the modification attributes are not fulfilled by the at least one component digital twin discovered in the first network digital twin instance and shared by the first and second NDT instances;
creating a third NDT instance of the real communications network for performing a modified first experiment in response to the modification request, wherein the third NDT instance comprises a third plurality of component digital twins satisfying all said requirements for component digital twins derived from the modification attributes.

7. A method according to the preceding claim,
wherein creating the third NDT instance comprises:
discovering at least one component digital twin in a fourth NDT instance of a real communications network, wherein the at least one component digital twin satisfies at least one of the requirements for component digital twins derived from the modification attributes, wherein the fourth NDT instance comprises a fourth plurality of component digital twins,
wherein the third plurality of component digital twins include the at least one component digital twin discovered in the fourth network digital twin instance, so that the at least one component digital twin discovered in the fourth network digital twin instance is shared by the third and fourth NDT instances.

8. A method according to any of the preceding claims comprising:
receiving several requests for experiment, wherein each of the several requests for experiment further comprises priority indication of the experiment,
treating the several requests for experiment according to the priority indications.

9. A method according to any of the preceding claims further comprising:
accessing a workspace as a function of a sender of the request for experiment,
wherein the workspace comprises a plurality of NDT instances and defines the following workspace attributes:
a plurality of component digital twins, selected among real data collection modules and computation modules, which can be used to create an NDT instance in the workspace,
access rights and identity of users of the workspace,
a synchronization policy with the real communications network of the plurality of component digital twins, and/or
computational resources to which the plurality of component digital twins which can be used to create a NDT part of the workspace can have access to;
deriving requirements for component digital twins so that the requirement for component digital twins are fulfilled by the workspace attributes;
wherein the first NDT instance is discovered within the workspace,
wherein the second NDT instance is created within the workspace.

10. A method according to any of the preceding claims further comprising:
performing the experiment in the second NDT instance.

11. An apparatus comprising means for:
receiving a request for experiment,
wherein the request for experiment comprises experiment attributes related to an experiment to be performed in a Network Digital Twin of a real communications network;
deriving requirements for component digital twins from the experiment attributes;
discovering at least one component digital twin in a first network digital twin (NDT) instance of the real communications network, wherein the at least one component digital twin satisfies at least one of the requirements for component digital twins, wherein the first network digital twin (NDT) instance is a first running NDT instance, wherein the first NDT instance comprises a first plurality of component digital twins, wherein the component digital twins are selected among:
∘ real data collection modules adapted to collect and store data from the real communications network,
∘ computation modules adapted to implement models with the collected data to analyze, diagnose and/or emulate operations running in the real communications network or in modifications thereof;
creating a second NDT instance for performing the experiment, wherein the second network digital twin (NDT) instance is a second running NDT instance
wherein the second NDT instance comprises a second plurality of component digital twins satisfying all said requirements for component digital twins, said second plurality of component digital twins including the at least one component digital twin discovered in the first network digital twin instance, so that the at least one component digital twin is shared by the first and second running NDT instances.

12. An apparatus according to the preceding claim comprising means for:
receiving a modification request for modifying a first experiment,
wherein the first experiment is performed by the first NDT instance,
wherein the modification request comprises modification attributes;
deriving requirements for component digital twins from the modification attributes;
detecting that the requirements derived from the modification attributes are not fulfilled by the at least one component digital twin discovered in the first network digital twin instance and shared by the first and second NDT instances;
creating a third NDT instance of the real communications network for performing a modified first experiment in response to the modification request, wherein the third NDT instance comprises a third plurality of component digital twins satisfying all said requirements for component digital twins derived from the modification attributes.

13. An apparatus according to the preceding claim, wherein the means for creating the
third NDT instance comprise means for:
discovering at least one component digital twin in a fourth NDT instance of a real communications network, wherein the at least one component digital twin satisfies at least one of the requirements for component digital twins derived from the modification attributes, wherein the fourth NDT instance comprises a fourth plurality of component digital twins,
wherein the third plurality of component digital twins include the at least one component digital twin discovered in the fourth network digital twin instance, so that the at least one component digital twin discovered in the fourth network digital twin instance is shared by the third and fourth NDT instances.

14. An apparatus according to any of the claims 11 to 13 comprising means for:
accessing a workspace as a function of a sender of the request for experiment,
wherein the workspace comprises a plurality of NDT instances and defines the following workspace attributes:
a plurality of component digital twins, selected among real data collection modules and computation modules, which can be used to create an NDT instance in the workspace,
access rights and identity of users of the workspace,
a synchronization policy with the real communications network of the plurality of component digital twins, and/or
computational resources to which the plurality of component digital twins which can be used to create a NDT part of the workspace can have access to;
deriving requirements for component digital twins so that the requirement for component digital twins are fulfilled by the workspace attributes;
wherein the first NDT instance is discovered within the workspace,
wherein the second NDT instance is created within the workspace.

15. A computer program comprising instructions for causing an apparatus to perform the method according to any of the claims 1 to 10.
